(19) Europäisches Patentamt
European Patent Office
Office européen des brevets

(11) **EP 2 167 989 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
***G01S 13/90*** *(2006.01)*

(21) Anmeldenummer: **08784550.9**

(22) Anmeldetag: **26.06.2008**

(86) Internationale Anmeldenummer:
**PCT/EP2008/005180**

(87) Internationale Veröffentlichungsnummer:
**WO 2009/003628 (08.01.2009 Gazette 2009/02)**

(54) **VERFAHREN ZUR VERARBEITUNG VON TOPS (TERRAIN OBSERVATION BY PROGRESSIVE SCAN) -SAR (SYNTHETIC APERTURE RADAR) -ROHDATEN**

METHOD FOR PROCESSING TOPS (TERRAIN OBSERVATION BY PROGRESSIVE SCAN) - SAR (SYNTHETIC APERTURE RADAR) - RAW DATA

PROCÉDÉ DE TRAITEMENT DE DONNÉES BRUTES D'UN SAR (SYNTHETIC APERTURE RADAR - RADAR À OUVERTURE SYNTHÉTIQUE) DE TOPS (TERRAIN OBSERVATION BY PROGRESSIVE SCAN - OBSERVATION DU TERRAIN PAR BALAYAGE PROGRESSIF)

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.07.2007 DE 102007031020**

(43) Veröffentlichungstag der Anmeldung:
**31.03.2010 Patentblatt 2010/13**

(73) Patentinhaber: **Deutsches Zentrum für Luft- und Raumfahrt e.V.**
**51147 Köln (DE)**

(72) Erfinder:
• **PRATS, Pau**
**82205 Gilching (DE)**
• **MITTERMAYER, Josef**
**81371 München (DE)**
• **SCHEIBER, Rolf**
**82178 Puchheim (DE)**
• **MOREIRA, Alberto**
**82140 Olching (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 0 795 762      EP-A- 0 924 534**
**DE-A1- 4 427 657**

• **DE ZAN F ET AL: "TOPSAR: Terrain observation by progressive scan" IEEE TRANSACTIONS ON GEOSCIENCE AND REMOTE SENSING, IEEE SERVICE CENTER, PISCATAWAY, NJ, US, Bd. 44, Nr. 9, 1. September 2006 (2006-09-01), Seiten 2352-2360, XP009105499 ISSN: 0196-2892 in der Anmeldung erwähnt**
• **PRATI C ET AL: "Spot Mode Sar Focusing With The W - K Technique" GEOSCIENCE AND REMOTE SENSING SYMPOSIUM, 1991. IGARSS '91. REMOTE SENS ING: GLOBAL MONITORING FOR EARTH MANAGEMENT., INTERNATIONAL JUNE 3-6, 1991, NEW YORK, NY, USA,IEEE, US, Bd. 2, 3. Juni 1991 (1991-06-03), Seiten 631-634, XP010041150 ISBN: 978-0-87942-675-0 in der Anmeldung erwähnt**
• **ANDREA MONTI GUARNIERI ET AL: "ScanSAR Focusing and Interferometry" IEEE TRANSACTIONS ON GEOSCIENCE AND REMOTE SENSING, IEEE SERVICE CENTER, PISCATAWAY, NJ, US, Bd. 34, Nr. 4, 1. Juli 1996 (1996-07-01), XP011020749 ISSN: 0196-2892 in der Anmeldung erwähnt**

EP 2 167 989 B1

- MITTERMAYER J ET AL: "Sliding spotlight SAR processing for TerraSAR-X using a new formulation of the extended chirp scaling algorithm" IGARSS 2003. IEEE 2003 INTERNATIONAL GEOSCIENCE AND REMOTE SENSING SYMPOSIUM. PROCEEDINGS. TOULOUSE, FRANCE, JULY 21 - 25, 2003; [IEEE INTERNATIONAL GEOSCIENCE AND REMOTE SENSING SYMPOSIUM], NEW YORK, NY : IEEE, US, Bd. 3, 21. Juli 2003 (2003-07-21), Seiten 1462-1464, XP010703419 ISBN: 978-0-7803-7929-9 in der Anmeldung erwähnt
- ALBERTO MOREIRA ET AL: "Extended Chirp Scaling Algorithm for Air- and Spaceborne SAR Data Processing in Stripmap and ScanSAR Imaging Modes" IEEE TRANSACTIONS ON GEOSCIENCE AND REMOTE SENSING, IEEE SERVICE CENTER, PISCATAWAY, NJ, US, Bd. 34, Nr. 5, 1. September 1996 (1996-09-01), XP011020772 ISSN: 0196-2892 in der Anmeldung erwähnt

- MOREIRA A ET AL: "Azimuth and range scaling for SAR and ScanSAR processing" IGARSS '96. 1996 INTERNATIONAL GEOSCIENCE AND REMOTE SENSING SYMPOSIUM 19960527, Bd. 2, 27. Mai 1996 (1996-05-27), Seiten 1214-1216, XP009105500 in der Anmeldung erwähnt

**Beschreibung**

Technisches Gebiet

Die Erfindung betrifft ein Verfahren zur Verarbeitung von TOPS(Terrain Observation by Progressive Scan)-SAR (Synthetic Aperture Radar)-Rohdaten in hochgenaue Bilddaten.

Im Folgenden wird zunächst eine kurze Einführung zu SAR und TOPS-SAR gegeben. Ein Radar mit synthetischer Apertur, abgekürzt SAR (Synthetic Aperture Radar), ist ein Instrument zur Fernerkundung, das in zunehmendem Maße bei der Abbildung, Überwachung und Untersuchung der Erdoberfläche Einsatz findet. Ein derartiges System besteht aus einer Trägerplattform, die sich mit einer konstanten Geschwindigkeit über der Erdoberfläche bewegt, einer Antenne, die in eine Richtung orthogonal zur Bewegungsrichtung blickt, und einem kohärenten Radarsystem, das periodisch mit einer Pulswiederholfrequenz PRF Impulse von hochfrequenten elektromagnetischen Wellen aussendet.

Die Richtung der Trägerplattformbewegung wird als die AzimutRichtung bezeichnet und die orthogonale Richtung, die diagonal nach unten ausgerichtet ist, wird als die Entfernungsrichtung oder auch als Range-Richtung bezeichnet. Im normalen SAR-Betriebsmodus, der als Streifenabbildungsmodus oder auch als Stripmap-Mode bezeichnet wird, wird während des Überflugs über ein zu beobachtendes Gebiet ein Streifen mit der Länge der überflogenen Strecke abgebildet. Die Streifenbreite ist unter anderem von der Länge des Zeitfensters abhängig, in dem die aus den ausgesendeten Impulsen rückgestreuten Radarechos empfangen werden. Die empfangenen Echos werden in der Frequenz umgesetzt (gemischt), demoduliert, digitalisiert und in einem zweidimensionalen Echosignalspeicher als sogenannte Rohdaten abgelegt.

Jede SAR-Verarbeitung umfasst im Wesentlichen eine Entfernungskompression, eine auch als Range-Zellen-Migration bekannte Korrektur der Zielentfernungsvariation und eine Azimutkompression. Die geometrische Auflösung in der Entfernungsrichtung ist eine Funktion der Bandbreite der ausgesendeten Radarimpulse. Zum Verbessern dieser Auflösung werden die gesendeten Impulse vorher moduliert, wofür in den meisten Fällen eine lineare Frequenzmodulation verwendet wird, die auch im Folgenden immer vorausgesetzt wird. Die Entfernungskompression bedeutet eine Filterung der empfangenen Signale in der Entfernungsrichtung entsprechend der Optimalfilter(Matched Filter)-Theorie, wodurch die zeitlich expandierten Signale zu Impulsen komprimiert werden.

Die Zielentfernungsvariation (Range-Migration) ist eine Folge der Änderung der Entfernung zwischen der Antenne und dem Punktziel während der Bildung der synthetischen Apertur. Die Korrektur der Range-Migration korrigiert die Entfernungsvariation der zu einem Punktziel gehörenden Echos im zweidimensionalen Rohdaten-Echospeicher.

Die Pulskompression in der Azimutrichtung gemäß der Optimalfilter-Theorie entspricht der Bildung der synthetischen Apertur. Die Azimutmodulation ist ebenso eine Folge der Entfernungsvariation zwischen der Antenne und dem Ziel beim Vorbeiflug der Trägerplattform. Die Optimalfilterung bedeutet eine kohärente Aufsummierung aller Echos, die zu einer Azimutposition gehören. Wenn die Zielentfernungsvariation vor der Azimutkompression korrigiert wird, kann die Azimutkompression durch eine eindimensionale Filterfunktion verwirklicht werden.

Spotlight-SAR und gleitendes (sliding) Spotlight-SAR sind Betriebsarten von SAR-Systemen, die eine signifikant höhere geometrische Auflösung erlauben. Im Spotlight-Modus wird die Antenne während des gesamten Vorbeiflugs so gesteuert, im Azimut also entsprechend gedreht, dass sie eine gleiche Szenenfläche (Fleck; spot) beleuchtet. Dadurch kann die Azimutauflösung im Vergleich zum gewöhnlichen Streifenabbildungsmodus verbessert werden. Die beobachteten Szenenabmessungen werden allerdings drastisch reduziert. Im gleitenden Spotlight-Modus ist das Rotationszentrum nicht im Zentrum der Antenne, sondern weiter weg von der beleuchteten Szene, so dass ein größerer Azimutbereich als im Spotlight-Fall abgedeckt werden kann.

Ein weiterer SAR-Erfassungsmodus ist der sogenannte ScanSAR-Modus. Beim ScanSAR-Modus wird der Antennenstrahl periodisch geändert, um verschiedene Unterstreifen (Subswaths) in der Entfernungsrichtung, also in verschiedenen Abständen zur Flugbahn liegende Streifen, zu beleuchten. Dies erlaubt eine Steigerung der Streifenbreite auf Kosten der Azimutauflösung. Dieser Modus ist auch unter der Bezeichnung "Wide-Swath-Modus" bekannt geworden.

Es folgt nun eine detailliertere Beschreibung des ScanSAR-Modus. Die Wide-Swath-Abdeckung wird durch periodisches Umschalten der Antennenstrahlelevation erreicht, so dass der Antennenstrahl - je nach eingeschaltetem Elevationswinkel - auf einen unterschiedlichen Entfernungs-Subswath gerichtet ist. Die Antennenstrahlumschaltung hat zur Folge, dass der Sensor eine endliche Sequenz von Echos, d.h. einen Burst, für jeden der abgebildeten Subswaths erfasst. In jedem Subswath erfasst der Scan zyklisch Bursts für eine Haltezeit $T_D$, die sich mit einer Periode $T_R$ ("Zyklus-Zeit") wiederholt.

Das auf die niedrigste ganze Zahl abgerundete Verhältnis $T_F/T_R$ ($T_F$ ist die Antennen-Footprint-Zeit) gibt die Anzahl von abgebildeten Beobachtungen an. Der Burst-Modus-Betrieb, der zum Erzielen einer Wide-Swath-Abdeckung nötig ist, begrenzt die Doppler-Historie für jedes Ziel auf ein Verhältnis $T_D/T_F$ im Vergleich zu einer äquivalenten Streifenabbildungs(Stripmap)-SAR-Erfassung. Als Folge davon wird die erfasste Azimutbandbreite für jedes Ziel um den gleichen Betrag reduziert und die Azimutauflösung verschlechtert sich dementsprechend.

Der ScanSAR-Modus hat einige Nachteile. Es entstehen eine Auszackung ("Scalloping"), d.h. eine periodische Modulation der Amplitude im fokussierten Bild, sowie ein azimutveränderliches Mehrdeutigkeitsverhältnis und ein rausch-äquivalentes Sigma-Null ($\sigma_0$). Diese Erscheinungen sind eine Folge der Tatsache, dass verschiedene Ziele mit verschiedenen Bereichen des Azimutantennendiagramms beobachtet werden.

In einem Artikel von F. De Zan, A. Monti Guarnieri: "TOPSAR: Terrain observation by progressive scan", IEEE Trans. on Geosci. and Remote Sensing, Vol. 44, Nr. 9, Seiten 2352-2360, Sept. 2006, wurde ein neuer Wide-Swath-Erfassungsmodus vorgeschlagen, der als TOPS-SAR bezeichnet wird. Dieser überwindet die Hauptnachteile des vorher beschriebenen ScanSAR-Modus mit Hilfe einer Steuerung der Antenne in Flugrichtung.

Die im vorgenannten Artikel vorgeschlagene Lösung zum Erzielen der gleichen Swath-Abdeckung bei gleichzeitigem Vermeiden der unerwünschten Effekte besteht in einer Gegendrehung der Antenne während der Erfassung, also in entgegengesetzter Drehrichtung von rückwärts nach vorwärts, mit einer konstanten Rotationsgeschwindigkeit $\omega_r$ (siehe Fig.l) im Gegensatz zum Spotlight-Fall, was zu einem gegenteiligen Effekt führt, d.h. einer Verschlechterung der Azimutauflösung.

Alle Ziele werden jedoch unter dem gleichen Azimutantennendiagramm beobachtet und deswegen verschwindet der Auszackungseffekt ("Scalloping"), und die Azimut-Mehrdeutigkeiten und das rausch-äquivalente Sigma-Null werden in Azimutrichtung konstant. Am Ende eines Bursts (Burstdauer $T_{B1}$, $T_{B2}$, ...) wird der Blickwinkel der sich mit der Geschwindigkeit $v$ in Azimutrichtung bewegenden Antenne A zur Beleuchtung eines nachfolgenden Subswath ausgerichtet, d.h. von der Richtung zum ersten Subswath (Subswath 1) wieder nach hinten geändert, um den zweiten Subswath (Subswath 2) zu beleuchten. Wenn der letzte Subswath abgebildet ist, richtet sich die Antenne wieder auf den ersten Subswath (Subswath 1), so dass keine Lücken zwischen Bursts des gleichen Subswath gelassen werden.

Was das TOPS-Rohdatensignal in einem Burst angeht, so hat es Ähnlichkeiten sowohl mit demjenigen bei ScanSAR als auch bei Spotlight. Das TOPS-Signal ähnelt dem Spotlight-Signal in dem Sinne, dass die Szenenbandbreite größer als die Pulswiederholfrequenz PRF ist. Es hat auch Ähnlichkeiten mit dem Signal im ScanSAR-Modus in dem Sinne, dass die Burst-Dauer kürzer als der fokussierte Ausgangsburst ist. Die SAR-Signaleigenschaften können mittels eines Zeit-Frequenz-Diagramms klar visualisiert werden.

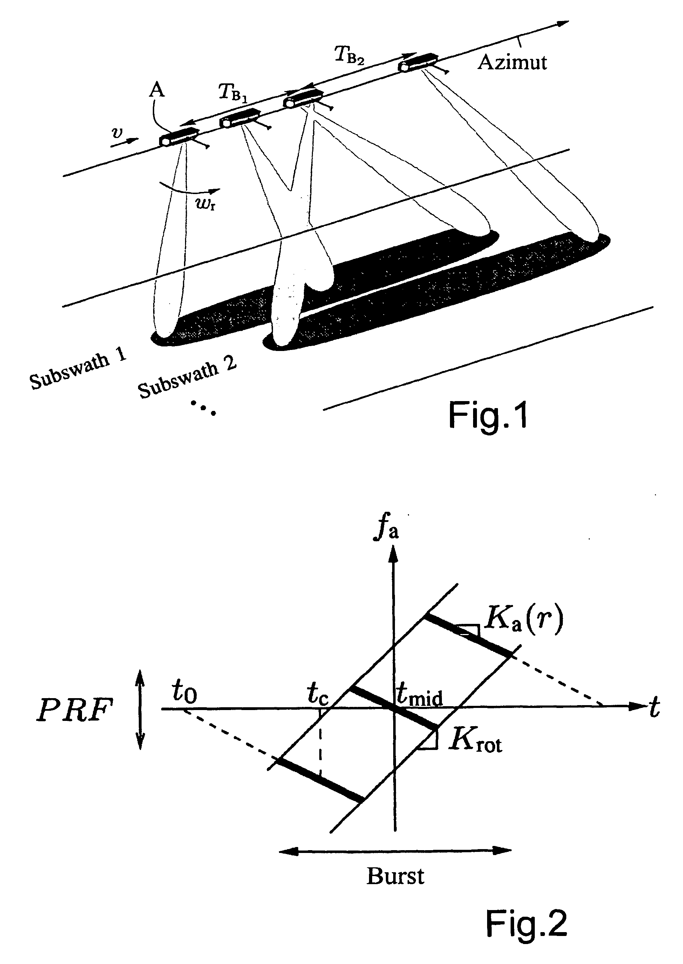

Die Doppler-Historie von drei Zielen an gleicher Position in der Entfernungsrichtung (Range-Richtung), aber unterschiedlicher Position in Azimutrichtung, ist in Form fetter, durchgezogener Linien dargestellt (Fig.2). Die Abszisse entspricht der Azimutzeit $t$ und die Ordinate der augenblicklichen Frequenz $f_a$. Das Ziel zu Beginn des Bursts wird unter einem negativen Squint-Winkel beobachtet, woraus sich negative Doppler-Frequenzen ergeben. Andererseits hat das Ziel am Ende des Bursts positive Dopplerfrequenzen.

Im Allgemeinen umspannt die gesamte Szenenbandbreite mehrere PRFs, ähnlich wie es beim Spotlight-Modus stattfindet. Demzufolge ist eine Prozedur erforderlich, um diesem ungenügenden Abtasten des Azimutsignals Rechnung zu tragen. Was die Ähnlichkeiten mit ScanSAR angeht, so ist das erste abgebildete Ziel (Fig.2) zu betrachten. Es wird zum Zeitpunkt $t_c$ beobachtet, der Strahlmittenzeit $t_{mid}$ genannt wird; jedoch sollte nach der Fokussierung das Ziel an der Doppler-Null-Position $t_0$ erscheinen. Daher ist der fokussierte Ausgangsburst größer als die tatsächliche Burst-Dauer.

Im vorerwähnten Artikel, in welchem der TOPS-Modus vorgestellt wird, ist auch ein zweckbestimmter Prozessor vorgeschlagen. Zur Anpassung an eine Azimutbandbreite, die größer als die Pulswiederholfrequenz PRF ist, verwendet dieser Prozessor einen Vorverarbeitungsschritt, wie er in dem Artikel von C. Prati, A. Monti Guarnieri, F. Rocca: "SPOT mode SAR focusing with the $\omega$-k technique", Proc. IEEE Geoscience and Remote Sensing Symposium (IGARSS), Espoo, Finnland, 3.-6. Juni 1991, Seiten 631-634, beschrieben ist.

Bei diesem Schritt werden die Daten im Spektralbereich zur Unterbringung einer größeren Szenenbandbreite entfaltet. Danach kann ein Standard-Wellenzahl-Stripmap-Prozessor oder irgendein anderer beliebiger SAR-Stripmap-Prozessor zum Fokussieren der Daten benutzt werden.

Um schließlich eine Anpassung an den größten fokussierten Ausgangsburst vorzunehmen, wird eine Nachverarbeitungslösung angewandt, wie sie in dem Artikel von A. Monti Guarnieri, C. Prati: "ScanSAR focusing and interferometry", IEEE Transactions on Geoscience and Remote Sensing, Vol. 34, Nr. 4, Seiten 1029-1038, Juli 1996, vorgeschlagen ist. Bei diesem Schritt werden die Daten im Zeitbereich in ähnlicher Weise wie beim Vorverarbeitungsschritt entfaltet. Eine Mehrraten-Filterbank erlaubt die Anwendung einer azimutabhängigen Filterung.

Außer dem vorstehend kommentierten Prozessor bestehen in der Literatur keine expliziten Prozessoren für die Verarbeitung von Daten, die im TOPS-Modus erfasst werden. Eine mögliche Lösung könnte die Kombination des Chirp-Scaling-Verfahrens mit Subaperturen und des durch Azimut-Scaling verbesserten SPECAN-Verfahrens sein, das im gleitenden Spotlight-Modus angewandt wird, wie er aus dem Artikel von J. Mittermayer, R. Lord, E. Börner: "Sliding spotlight SAR processing for TerraSAR-X using a new formulation of the extended chirp scaling algorithm", Proc. IEEE Geoscience and Remote Sensing Symposium (IGARSS), Toulouse, Frankreich, 21.-25 Juli 2003, bekannt ist. In diesem Fall wird eine Kombination des durch Azimut-Scaling verbesserten SPECAN-Verfahrens, wie es in EP 0 795 762 B1 vorgeschlagen wird, zusammen mit einer aus EP 0 924 534 B1 bekannten Subapertur-Lösung zur Korrektur der Ziel-Entfernungsvariation verwendet.

Die Korrektur der Ziel-Entfernungsvariation wird durch Verwendung des Chirp-Scaling-Algorithmus ausgeführt, der in dem Artikel von A. Moreira, J. Mittermayer und R. Scheiber: "Extended Chirp Scaling Algorithm for Air- and Spaceborne SAR Data Processing in Stripmap and ScanSAR Imaging Modes", IEEE Transactions on Geoscience and Remote Sensing, Vol. 34, Nr. 5, 1996, Seiten 1123-1136, beschrieben ist.

Die größere Azimutszenenbandbreite kann unter Verwendung von Subaperturen im Zeitbereich berücksichtigt werden, so dass die augenblickliche Bandbreite innerhalb einer Subapertur kleiner als die Pulswiederholfrequenz PRF ist. Das durch Azimut-Scaling verbesserte SPECAN-Verfahren kann dann auf das Azimutsignal angewandt werden, um dem fokussierten Ausgangsburst Rechnung zu tragen, der größer als der Erfassungsburst ist.

Der vorher erläuterte, für den TOPS-Modus zweckbestimmte Prozessor hat den Nachteil, dass er Vor- und Nachverarbeitungsschritte erfordert, um mit den Besonderheiten des TOPS-Signals umzugehen, was zu einer Zunahme des Rechenaufwandes führt. Darüber hinaus ist auch die Stolt-Transformation, die eine Interpolation darstellt, nötig, um die Korrektur der Range-Migration zu vervollständigen. Die Mehrraten-Filterbank verlangt, dass die Daten in kleinen Blöcken in der Azimutzeit mit einer gewissen Überlappung verarbeitet werden, weswegen es ineffizient und ungenau wird, wenn die Azimutverarbeitung ausgeführt wird.

Die Verwendung von Subaperturen zur Berücksichtigung der größeren Szenenbandbreite zusammen mit dem durch Azimut-Scaling verbesserten SPECAN-Verfahren hat im TOPS-Fall manche Nachteile. Insbesondere ist das durch Azimut-Scaling verbesserte SPECAN-Verfahren infolge der Tatsache, dass das fokussierte Bild nach einer direkten Fourier-Transformation erhalten wird (es wird im Entfernungs-Doppler-Bereich fokussiert), nicht effizient. Daher tritt immer dann, wenn die Sinus-Signale Frequenzen haben, die höher als die Pulswiederholfrequenz PRF sind, Aliasing (Unterabtastung durch Rückfaltung) auf. Die Frequenz dieser Signale hängt von der Sensorgeschwindigkeit $v$, der Wellenlänge $\lambda$, dem ausgewählten Scaling-Bereich und der Azimutzeitposition des Ziels ab.

Die ersten beiden können während der Verarbeitung nicht geändert werden und die Scaling-Entfernung sollte gewöhnlich innerhalb des abgebildeten Streifens liegen, um das benötigte Ausmaß der Subapertur für die Entfernungsvariationskorrektur zu minimieren. Die Verarbeitung wird sonst ineffizient. Die Größe der Szene schränkt eine effiziente Verwendung des durch Azimut-Scaling verbesserten SPECAN-Verfahrens ein. Für kleine Szenenausmaße, die im Spotlight- oder gleitenden Spotlight-Modus der Fall sind, oder für kleine Burst-Längen, wie diese beim ScanSAR-Modus vorliegen, tritt dieses Aliasing nicht auf und die Verarbeitung wird effizient.

Im TOPS-Fall allerdings tritt das Aliasing mit Sicherheit auf, da das Szenenausmaß für einen Burst gewöhnlich ziemlich groß ist. Eine Azimutblockverarbeitung könnte eine Option sein, um die Bilder mit Hilfe des durch Azimut-Scaling verbesserten SPECAN-Verfahrens zu fokussieren; allerdings ist diese Lösung ineffizient. Eine andere Möglichkeit bestünde darin, die PRF-Abtastung vor der Azimut-Scaling-Operation mittels Zero-Padding zu steigern; jedoch steigt auch hier wieder der Rechenaufwand und die Verarbeitung ist ineffizient.

Die ursprüngliche Azimut-Scaling-Lösung sorgt für keine effiziente Lösung, die für den TOPS-Modus und den gleitenden Spotlight-Modus zur Azimut-Nebenzipfelunterdrückung anwendbar ist. Dies ist eine Folge der Azimutfrequenz- und Azimutzeitpositionsvariation der erforderlichen Azimutreferenzfunktion. Gemäß dem Artikel von A. Moreira, R. Scheiber, J. Mittermayer: "Azimuth and Range Scaling for SAR and ScanSAR Processing", Proc. IEEE Geoscience and Remote Sensing Symposium (IGARSS), Lincoln, Nebraska, USA, 1996, kann die Azimutabtastung des Bildes verändert werden. Dies verlangt allerdings, dass alle Ziele im Basisband liegen, weswegen dies keine Option für den TOPS-Modus und den gleitenden Spotlight-Modus ist.

Darstellung der Erfindung

Aufgabe der vorliegenden Erfindung ist es, bei einem Verfahren zur Verarbeitung von TOPS-SAR-Rohdaten zu Bilddaten diese Verarbeitung in einer interpolationsfreien, hochgenauen und sehr effizienten Weise durchzuführen, wobei Azimut-Aliasing (Rückfaltung) und andere sonst bei der Verarbeitung von TOPS-Rohsignalen entstehende Nachteile vermieden werden.

Gemäß der vorliegenden Erfindung wird dies bei einem Verfahren zur Verarbeitung von TOPS(Terrain Observation by Progressive Scan)-SAR(Synthetic Aperture Radar)-Rohdaten in exakte Bilddaten durch die im kennzeichnenden Teil des beigefügten Anspruchs 1 angegebenen Merkmale erreicht.

Bei dem Verfahren nach der Erfindung wird eine Subapertur-Verarbeitung ausgeführt, um Azimut-Aliasing zu vermeiden. Innerhalb jeder Subapertur wird eine Entfernungskompression und eine Korrektur der Zielentfernungsvariation ausgeführt, wogegen eine neue Azimut-Scaling-Lösung, die als Basisband-Azimut-Scaling bezeichnet wird, für die Verarbeitung des Azimutsignals verwendet wird.

Während der Verarbeitung in der Entfernung findet eine Aufteilung in Azimut-Subaperturen statt. Demzufolge kann eine niedrigere Pulswiederholfrequenz PRF benutzt werden, da das Abtasttheorem nur innerhalb der Subaperturen in der Azimutrichtung erfüllt werden muss. Deshalb ist bei diesem Schritt jeder beliebige Stripmap-Prozessor geeignet, um die Schritte der Entfernungskompression, der Korrektur der Entfernungsvariation und der sekundären Entfernungskompression auszuführen.

In einem bevorzugten Beispiel wird der erweiterte Chirp-Scaling-Algorithmus verwendet, der im Artikel von A. Moreira, J. Mittermayer und R. Scheiber: "Extended Chirp Scaling Algorithm for Air- and Spaceborne SAR Data Processing in Stripmap and ScanSAR Imaging Modes", IEEE Transactions on Geoscience and Remote Sensing, Vol. 34, Nr. 5, Seiten 1123-1136, 1996, beschrieben ist. Dieser Algorithmus erlaubt die Ausführung der angegebenen Schritte ohne Verwendung irgendeiner Interpolation, weswegen die Lösung effizient und genauer wird.

Gemäß der vorliegenden Erfindung wird die Azimutverarbeitung mit einem verbesserten Verfahren des Azimut-Scaling ausgeführt, mittels dem eine lange Azimutreferenzfunktion und somit eine große Azimutabmessung während der Verarbeitung verhindert werden. Die Scaling-Entfernung ist nicht konstant, sondern hängt von der Entfernung ab. Sie ist nicht gleich dem ursprünglichen Entfernungsvektor. Sie wird so berechnet, dass in Kombination mit dem späteren Derotationsschritt eine konstante Azimutabtastung für alle Entfernungen erreicht wird.

Die Vorteile des ursprünglichen Azimut-Scaling für den ScanSAR-Modus und den Spotlight-Modus bleiben mit dem Basisband-Azimut-Scaling nach der vorliegenden Erfindung erhalten. Das Azimut-Scaling berücksichtigt daher die hyperbolische Azimutmodulation, so dass die Azimutverarbeitung für alle Entfernungen hochpräzise ist und keine neue Abtastung mit Interpolation für die geometrische Korrektur in Azimutrichtung nötig ist. Das gewünschte Abtastintervall im verarbeiteten Bild kann über die Auswahl einer Referenz-Scaling-Entfernung eingestellt werden, wobei auf diese Weise die Rekombination verschiedener Subswaths erleichtert wird.

Die ausgewählte Derotationsfunktion, die im Azimutzeitbereich angewandt wird, ermöglicht es, dass alle Ziele im Basisband liegen, wobei auf diese Weise die effektive Chirp-Rate geändert wird. Da die Phase infolge des Azimut-Scaling-Schrittes rein quadratisch ist, kann daher ein Optimalfilter (Matched-Filter) angewandt werden, das die effektive Chirp-Rate berücksichtigt. Bei diesem Schritt kann eine Gewichtungsfunktion während der Optimalfilterung eingeschlossen werden, um Azimut-Nebenzipfel effizient zu reduzieren. Eine weitere Inverse-Fast-Fourier-Transformation (IFFT) ergibt ein fokussiertes Bild, und eine abschließende Phasenfunktion im Zeit-bereich ermöglicht eine getreue Phasenerhaltung. Das Verfahren gemäß der vorliegenden Erfindung hat daher eine sehr hohe Phasengenauigkeit.

Insgesamt werden auf diese Art die folgenden Vorteile mit dem Verfahren nach der Erfindung erreicht:

Mit der Subapertur-Verarbeitung kann eine niedrigere Pulswiederholfrequenz PRF bei der Verarbeitung benutzt werden und es wird auch die Verwendung der kurzen Fast-Fourier-Transformation (FFT) ermöglicht, was zu einer Verringerung des Rechenaufwandes führt.

Die Basisband-Azimut-Scaling-Lösung nach der Erfindung erlaubt zugleich eine Herstellung des gewünschten Abtastintervalls und eine Basisband-Behandlung aller Ziele ohne die Notwendigkeit weiterer Schritte. Während der Optimalfilterung kann auch die Nebenzipfelreduzierung entlang der Azimutdimension über eine Gewichtung effizient ausgeführt werden. Die neue Azimutverarbeitung wird dann lediglich mit der Verwendung von Multiplizierern und Fourier-Transformationen unter Vermeidung von Interpolationen ausgeführt. Demzufolge wird eine hochpräzise, phasenerhaltende Verarbeitung erreicht.

Anspruch 2 beinhaltet eine vorteilhafte Verwendungsmöglichkeit des im Anspruch 1 angegebenen Verfahrens zur Verarbeitung von TOPS(Terrain Observation by Progressive Scan)-SAR(Synthetic Aperture Radar)-Rohdaten.

<u>Beschreibung der Zeichnungen</u>

Die Erfindung wird nachfolgend anhand von bevorzugten Ausführungsformen unter Bezugnahme auf die beiliegenden Zeichnungen im Einzelnen erläutert. Es zeigen:

Fig.1 eine bereits vorher beschriebene Erfassungsgeometrie für den TOPS-Abbildungsmodus,

Fig.2 ein ebenfalls bereits vorher beschriebenes Zeit-Fre- quenz-Diagramm, kennzeichnend für den TOPS-Abbildungs- modus,

Fig.3 eine schematische Flussdiagrammansicht einer bevorzug- ten Prozedur des Verfahrens nach der vorliegenden Er- findung,

Fig.4 eine Skizze, die den Ort des Rotationszentrums und die Rotationsentfernung im TOPS-Abbildungsmodus zeigt,

Fig.5 eine Skizze, die zeigt, wie die Umsetzung ins Basisband durch Multiplizieren mit einer Chirp-Funktion (lange gestrichelte Linie) im Zeitbereich ausgeführt wird, so dass eine Azimut-Nebenzipfelunterdrückung effizient ausgeführt werden kann,

Fig.6 ein Zeit-Frequenz-Diagramm, das zeigt, wie die Scaling- Operation die benötigte Rotationsdistanz ändert, um das Signal für Ziele in einer von der Scaling-Entfernung verschiedenen Entfernung ins Basisband zu legen, wobei die gestrichelten Linien den Diagrammzustand vor der Scaling-Operation und die durchgezogenen Linien den Zu- stand nach der Scaling-Operation darstellen, und

Fig.7    Konturdarstellungen, die das mit dem Verfahren nach der vorliegenden Erfindung erzielte Verarbeitungsergebnis von neun Punktzielen in kurzer Entfernung (oben), mitt- lerer Entfernung (Mitte) und weiter Entfernung (unten) zeigen.

Beschreibung der Erfindung

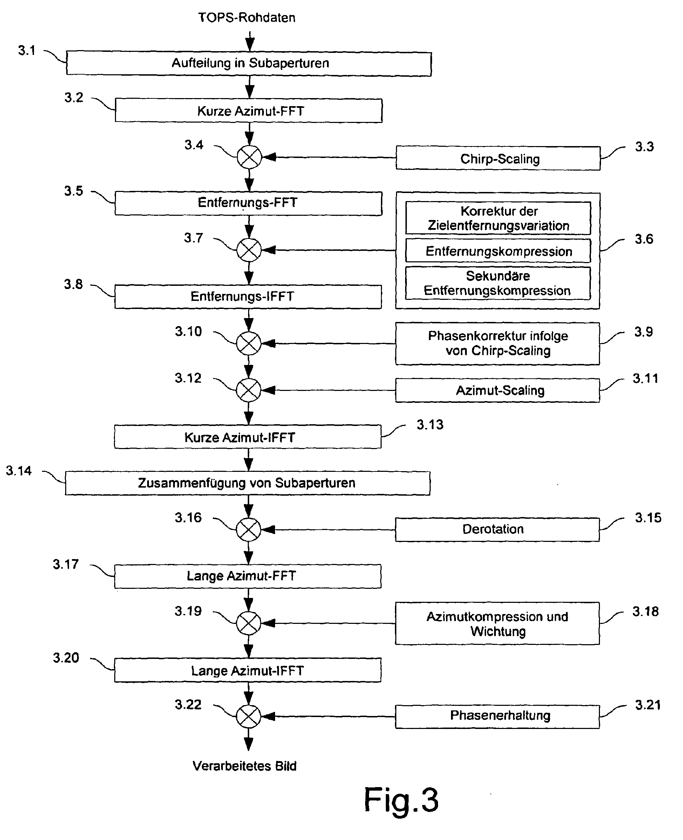

Fig.3 zeigt in einem schematischen Flussdiagramm die einzelnen Prozedurschritte bei einer bevorzugten Ausführung des Verfahrens nach der vorliegenden Erfindung. In den sich auf Fig.3 beziehenden Gleichungen ist $t$ der Zeitvektor in der Azimutrichtung (d.h. die "Slow"-Zeit) , $\tau$ die Zeit in der auch als Range-Richtung bezeichneten Entfernungsrichtung (d.h. die Echolaufzeit), $f_a$ der Azimutfrequenzvektor (d.h. die Dopplerfrequenz), $f_r$ die Entfernungsfrequenz, $r_0$ die Entfernung zu einem Punktziel, $r$ der Entfernungsvektor, $\lambda$ die Wellenlänge, $c$ die Lichtgeschwindigkeit und $v$ bezeichnet die Geschwindigkeit auf dem Boden.

Die TOPS-Rohdaten werden im Schritt 3.1 zuerst in Subaperturen aufgeteilt. Diese Aufteilung ähnelt derjenigen, die bei der Spotlight-Verarbeitung gemäß der bereits erwähnten Patentschrift EP 0 924 534 B1 ausgeführt wird. Während der Verarbeitung muss die Azimutbandbreite $B_a$ eines Punktziels, die von der Antennenstrahlbreite abhängt, ausreichend abgetastet werden. Die gesamte Azimutbandbreite der Szene ist jedoch größer als die maximale augenblickliche Bandbreite $B_a$, weil die Azimutpositionierung eines Ziels einen Frequenz-Offset verursacht. Die augenblickliche Frequenz ist durch Gleichung (1) gegeben:

$$f_i = K_{rot} \cdot t = -\frac{2 \cdot v^2}{\lambda \cdot r_{rot0}} \cdot t \; , \qquad (1)$$

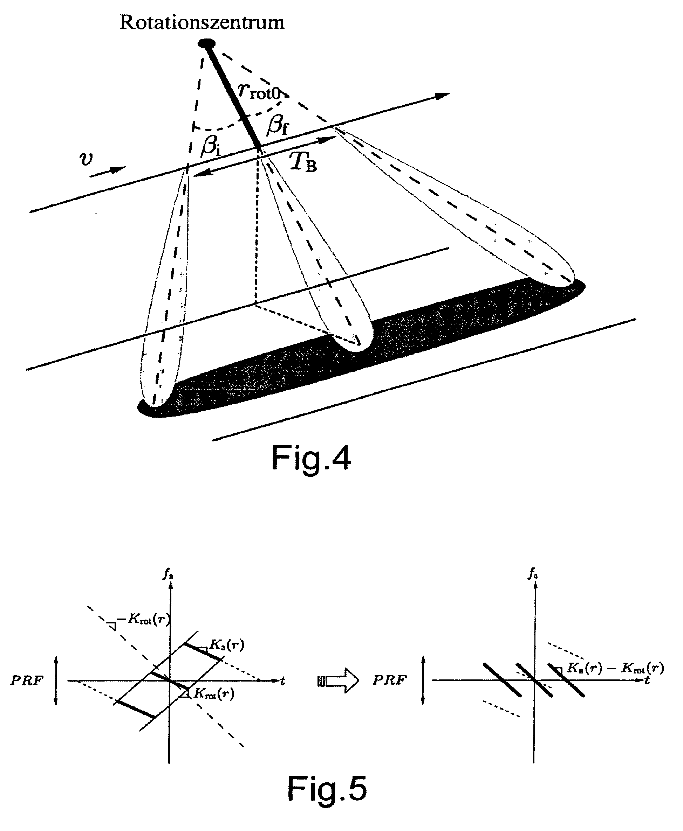

wobei $r_{rot0}$ die Vektorentfernungsdistanz zu dem durch die Geometrie gegebenen Rotationszentrum ist, wie in Fig.4 gezeigt ist.

Wenn die Daten verarbeitet werden, sollte die Pulswiederholfrequenz PRF wenigstens so groß wie die gesamte Azimutbandbreite $B_{a,total}$ sein, um mehrdeutige Azimutfrequenzen während der Korrektur der Entfernungsvariation zu verhindern. Mehrdeutige Azimutfrequenzen ergeben einen Auflösungsverlust und eine Verschlechterung des endgültigen, fokussierten Bildes infolge eines Auftretens von "Geisterbildern".

Durch die Verwendung der Subapertur-Verarbeitung ist daher eine niedrigere Pulswiederholfrequenz PRF ausreichend. Die Berechnung einer Subapertur-Zeit $T_{sub}$ ist durch Gleichung (2) angegeben:

$$T_{sub} \leq \frac{PRF - B_a}{|K_{rot}|} \; . \qquad (2)$$

Nach der Aufteilung in Subaperturen im Schritt 3.1 wird die Verarbeitung für jede Subapertur $i$ mit dem zugehörigen Dopplerzentroid $f_{DC,i}$ weitergeführt. Um ein schlechtes Verarbeitungsergebnis infolge der Subapertur-Verarbeitung zu verhindern, werden die Subaperturen mit geringer Überlappung gebildet.

Im Folgenden wird unter "kurze Azimut-FFT (Fast-Fourier-Transformation)" bzw. "kurze Azimut-IFFT (Inverse-Fast-Fourier-Transformation)" die durch Anwendung einer Subapertur-Verarbeitung kurze Länge oder kleine Punktzahl von FFT- bzw. IFFT-Operationen in Azimutrichtung verstanden. Nach dem Zusammenfügen der Subaperturen (wie nachstehend in Verbindung mit Schritt 3.14 behandelt) ist die volle Länge des Zeitsignals wieder hergestellt und die abschließenden FFT-Operationen müssen daher eine "lange Azimut-FFT" bzw. eine "lange Azimut-IFFT" sein.

Im Verarbeitungsschritt 3.2 werden die Daten in den Entfernungs-Doppler-Bereich über eine kurze Azimut-FFT transformiert. Danach wird ein Chirp-Scaling ausgeführt, für das die in Gleichung (5) angegebene Chirp-Scaling-Funktion $H_{cs}(f_a, \tau; r_0)$ (Block 3.3) mit dem Signal in einer ersten Multiplikationseinheit 3.4 multipliziert wird.

Das Chirp-Scaling ergibt eine Anpassung der entfernungsabhängigen Krümmung der Bahn an die Krümmung einer Referenzbahn für eine Referenzentfernung $r_{ref}$, wobei eine Bahn den geometrischen Ort der Phasenzentren aller Entfernungssignale darstellt, die zu einem Punktziel gehören. Die Form der Referenzbahn kann mit $t_{a,ref}(f_a)$ in der folgenden Weise beschrieben werden:

$$t_{a,ref} = \frac{2 \cdot r_{ref}}{c} \cdot \left(a(f_a) + 1\right), \qquad (3)$$

wobei der lineare Scaling-Faktor $a(f_a)$ die Frequenzabhängigkeit der Entfernungsvariation beschreibt:

$$a(f_a) = \frac{1}{\sqrt{1 - \left(\dfrac{\lambda \cdot f_a}{2 \cdot v}\right)^2}} - 1 . \qquad (4)$$

In der Chirp-Scaling-Funktion $H_{cs}$ ist $K_{eff}$ die Modulationsrate in der Entfernungsrichtung, die von der Azimutfrequenz und der Referenzentfernung abhängig ist, da sie die sekundäre Entfernungskompression einschließt:

$$H_{cs}\left(f_a, \tau; r_0\right) = \exp\left[- j \cdot \pi \cdot K_{eff}\left(f_a; r_{ref}\right) \cdot a(f_a) \cdot \left(\tau - \tau_{ref}\left(f_a\right)\right)\right] . \qquad (5)$$

Nach dem Chirp-Scaling wird eine Entfernungs-FFT (Block 3.5) zum Transformieren der Daten in den zweidimensionalen Frequenzbereich verwendet, wobei die Entfernungskompression, die Korrektur der Ziel-Entfernungsvariation und die sekundäre Entfernungskompression über eine Multiplikation mit der in Gleichung (6) angegebenen Pha-senfunktion $H_{rcmc}(f_a, f_r; r_{ref})$ (Block 3.6) in einer zweiten Multiplikationseinheit 3.7 ausgeführt werden:

$$H_{rcmc}\left(f_a, f_r; r_{ref}\right) = \exp\left[- j \frac{\pi}{K_{eff}\left(f_a; r_{ref}\right) \cdot \left(1 + a(f_a)\right)} f_r^2\right] \cdot \exp\left[j \frac{4 \cdot \pi}{c} \cdot r_{ref} \cdot a(f_a) \cdot f_r\right] . \qquad (6)$$

In Gleichung (6) bezeichnet die erste Phasenfunktion die Filterfunktion für die Entfernungskompression. Die zweite Phasenfunktion führt die Korrektur der Ziel-Entfernungsvariation aus. Infolge des mit Gleichung (5) ausgeführten Chirp-Scaling kann diese Korrektur für alle Entfernungen gleichzeitig mittels einer linearen Verschiebung in Entfernungsrichtung bewerkstelligt werden, die nur von der Azimutfrequenz abhängig ist.

Im nächsten Schritt des Prozesses wird eine IFFT in der Entfernung (Block 3.8) für eine Rücktransformation in den Entfernungs-Doppler-Bereich verwendet. Während des Chirp-Scaling wird in das Signal ein zusätzlicher, entfernungsabhängiger Azimutphasen-Offset eingeführt, der über eine Multiplikation mit einer in Gleichung (7) angegebenen Korrekturfunktion $H_{corr}(f_a; r_0)$ (Block 3.9) in einer dritten Multiplikationseinheit 3.10 entfernt wird:

$$H_{corr}\left(f_a; r_0\right) = \exp\left[j \cdot \pi \cdot K_{eff}\left(f_a; r_{ref}\right) \cdot \left(1 + a(f_a)\right) \cdot a(f_a) \cdot \left(\frac{2}{c} \cdot \left(r_0 - r_{ref}\right)\right)^2\right] . \qquad (7)$$

Im nächsten Schritt des Prozesses wird ein neues Azimut-Scaling ausgeführt. Dieses ergibt eine Beseitigung der hyperbolischen Azimutphase und das Ersetzen derselben durch eine quadratische Phasenform mittels einer Multiplikation der Signale mit einer Phasenfunktion $H_a(f_a; r_0)$ (Block 3.11) in einer vierten Multiplikationseinheit 3.12:

$$H_a(f_a; r_0) = \exp\left[ j \cdot \frac{4 \cdot \pi}{\lambda} \cdot r_0 \cdot (\beta(f_a) - 1) \right] \cdot \exp\left[ -j \cdot \frac{\pi}{K_{scl}(r)} \cdot f_a^2 \right] \qquad (8)$$

mit

$$\beta(f_a) = \sqrt{1 - \left( \frac{\lambda \cdot f_a}{2 \cdot v} \right)^2} \; . \qquad (9)$$

Die rein-quadratische Phasenhistorie wird durch die Scaling-Dopplerrate $K_{scl}(r)$ beschrieben. Die Scaling-Entfernung ist nicht konstant und ist nicht gleich dem ursprünglichen Entfernungsvektor $r$, sie hängt von der Entfernung ab, wie in den Gleichungen (10) bis (12) beschrieben ist. Der Grund zur Verwendung dieser entfernungsabhängigen Scaling-Entfernung wird später erläutert.

$$K_{scl}(r) = -\frac{2 \cdot v^2}{\lambda \cdot r_{scl}(r)} \qquad (10)$$

$$r_{scl}(r) = \frac{r_{scl0}}{r_{rot0}} r_{rot}(r) \qquad (11)$$

$$r_{rot}(r) = \frac{r_{rot0} - r}{1 - r_{scl0}/r_{rot0}} \; . \qquad (12)$$

Da das Azimut-Scaling im Zeitbereich eine Verschiebung der nicht im Beleuchtungszentrum liegenden Azimutsignale ergibt, ist eine geringe Erweiterung der Azimutdimension erforderlich. Diese Erweiterung fällt jedoch gewöhnlich in den Bereich, der durch die Erweiterung der Subaperturgröße auf die nächste Potenz von zwei erreicht wird. Die Anzahl von Azimutpunkten sollte eine Potenz von zwei sein, um den Rechenaufwand der FFT/IFFT-Schritte zu minimieren.

Im nächsten Schritt des Prozesses wird eine Azimut-IFFT (Block 3.13) für eine Rücktransformation in die Azimut/Entfernungs-Zeit benutzt. Dann werden die einzelnen Subaperturen im Schritt 3.14 zusammengefügt. Danach überspannt die Bandbreite des Signals immer noch die Pulswiederholfrequenz PRF. Daher kann eine Demodulation in einer fünften Multiplikationseinheit 3.16 ausgeführt werden, indem die in Gleichung (13) angegebene Derotationsfunktion $H_{derot}(t,r)$ (Block 3.15) verwendet wird.

Die Wirkung auf das Signal infolge dieser Derotationsfunktion ist in Fig.5 abgebildet. Die in der Derotationsfunktion benutzte Chirp-Rate hängt von der Entfernung ab und ist in Gleichung (14) angegeben. An diesem Punkt wird die effektive Chirp-Rate des Signals entsprechend Gleichung (15) verändert.

$$H_{derot}(t,r) = \exp\left[- j \cdot \pi \cdot K_{rot}(r) \cdot (t - t_{mid})^2\right] \qquad (13)$$

$$K_{rot}(r) = -\frac{2 \cdot v^2}{\lambda \cdot r_{rot}(r)} \qquad (14)$$

$$K_{eff}(r) = K_{scl}(r) - K_{rot}(r) . \qquad (15)$$

Infolge der Tatsache, dass das Datenspektrum für alle Ziele nun im Basisband liegt, kann ein Optimalfilter eingesetzt werden. Nach einer langen Azimut-FFT (Block 3.17) wird eine Optimalfilterung unter Verwendung von Gleichung (16) (Block 3.18) in einer sechsten Multiplikationseinheit 3.19 ausgeführt. An diesem Punkt kann auch leicht eine Azimut-Nebenzipfelunterdrückung mittels einer Gewichtungsfunktion $W(f_a)$ ausgeführt werden. Tatsächlich ist dies der einzige optimale Punkt, an dem die Anwendung der Gewichtungsfunktion zu korrekten Ergebnissen im TOPS-Fall führt.

$$H_{comp}(f_a,r) = W(f_a) \cdot \exp\left[j \cdot \frac{\pi}{K_{eff}(r)} \cdot f_a^2\right], \qquad -\frac{PRF}{2} + f_{DC} < f_a < \frac{PRF}{2} + f_{DC} \qquad (16)$$

$f_{DC}$ ist hier der mittlere Dopplerzentroid der Datenerfassung. Eine lange IFFT (Block 3.20) ergibt ein fokussiertes Signal. Die Daten müssen jedoch mit der in Gleichung (17) angegebenen Phasenfunktion $H_{phase}(t,r)$ zum Zwecke einer phasenerhaltenden Verarbeitung multipliziert werden, wozu eine siebte Multiplikationseinheit 3.22 verwendet wird.

$$H_{phase}(t,r) = \exp\left[j \cdot \pi \cdot K_t(r) \cdot \left(1 - \frac{r_{scl0}}{r_{rot0}}\right)^2 \cdot (t - t_{mid})^2\right], \qquad (17)$$

wobei

$$K_t(r) = -\frac{2 \cdot v^2}{\lambda \cdot (r_{rot}(r) - r_{scl}(r))} . \qquad (18)$$

Die Notwendigkeit einer entfernungsabhängigen Scaling-Rate wird nachfolgend erläutert. Die Bildabtastung nach Verwendung der Azimut-Scaling-Lösung ist in Gleichung (19) angegeben.

$$\Delta x_{new} = \Delta x_{orig} \cdot \left( 1 - \frac{r_{scl}}{r_{rot}} \right) = \frac{v}{PRF} \cdot \left( 1 - \frac{r_{scl}}{r_{rot}} \right), \qquad (19)$$

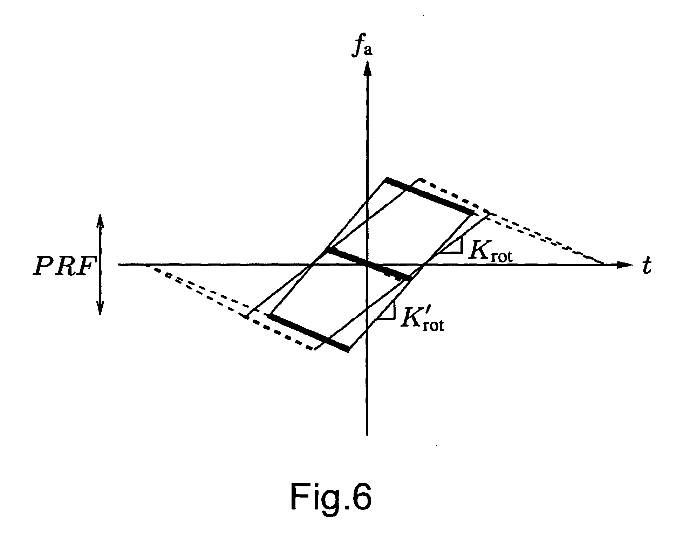

wobei $\Delta x_{orig}$ die ursprüngliche Abtastung gleich $v/PRF$ ist. Man könnte an die Verwendung einer konstanten Scaling-Entfernung $r'_{scl}$ denken, aber dann ändert sich die Rotationsrate, wie in Fig.6 abgebildet und durch Gleichung (20) ausgedrückt ist:

$$r'_{rot} = r_{rot0} - \left( r - r'_{scl} \right). \qquad (20)$$

Wenn Gleichung (20) verwendet wird, um das Signal richtig im Basisband zu haben, wenn eine konstante Scaling-Entfernung benutzt wird, dann hängt die endgültige Azimutabtastung des Bildes von der Entfernung ab, wie in Gleichung (19) festgestellt ist. Da es erwünscht ist, die gleiche Azimutabtastung für alle Entfernungen zu haben und zugleich alle Ziele richtig im Basisband zu haben, besteht daher die Lösung darin, einen Scaling- und einen Derotationsvektor zu verwenden, die in Gleichung (11) bzw. in Gleichung (12) angegeben sind. Wird dies so ausgeführt, dann ist die Azimutabtastung durch Gleichung (21) gegeben:

$$\Delta x_{new} = \Delta x_{orig} \cdot \left( 1 - \frac{r_{scl0}}{r_{rot0}} \right), \qquad (21)$$

wobei $r_{scl0}$ entsprechend der gewünschten endgültigen Azimutabtastung ausgewählt wird und innerhalb des Swath liegen sollte, um die benötigte Erweiterung der Subaperturen zu minimieren. Es ist festzustellen, dass im TOPS-Erfassungsmodus $r_{rot0}$ negativ ist, so dass die neue Bildabtastung größer als die ursprüngliche Rohdatenabtastung ist. Dies ist wünschenswert, da die Auflösung schlechter als im Fall des Streifenabbildungs(Stripmap)-Modus ist.

Die durch die vorliegende Erfindung vorgeschlagene Lösung erlaubt eine effiziente Verarbeitung von TOPS-Daten, da keine Blockverarbeitung für die Azimutfokussierung benötigt wird. Die vorgeschlagene Lösung erlaubt auch die Auswahl der endgültigen Azimutabstände. Letzteres ist sehr von Nutzen, da die Notwendigkeit einer Interpolation zum Rekombinieren verschiedener Subswaths vermieden wird (verschiedene Subswaths haben verschiedene Pulswiederholfrequenzen PRF und daher verschiedene Azimutabtastungen). Das Basisband-Azimut-Scaling gewährleistet somit, alle Ziele im Basisband zu haben und die gewünschte Azimutabtastung auszuwählen.

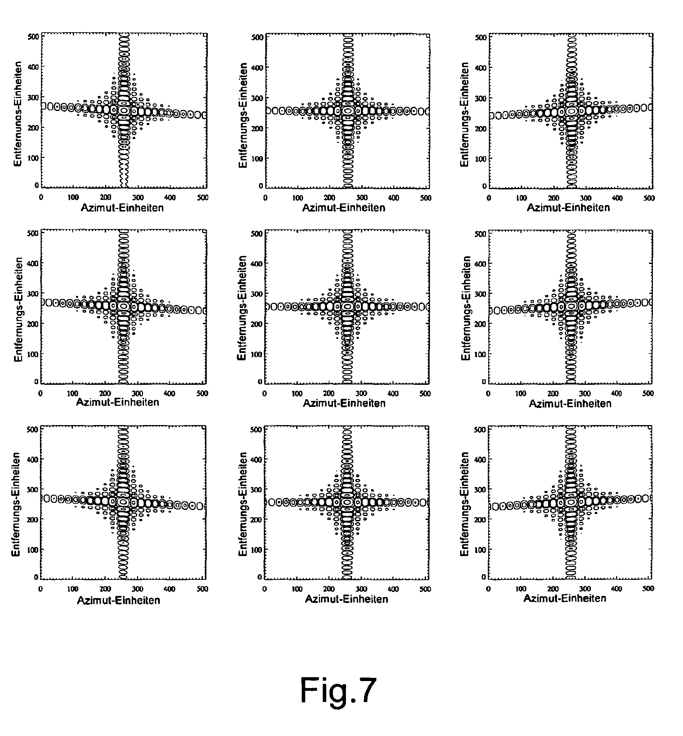

Fig.7 zeigt das Ergebnis der Verarbeitung von neun simulierten Zielen im X-Band mit dem Verfahren nach der Erfindung. Da keine Gewichtungsfunktionen während der Verarbeitung verwendet wurden, zeigt die Konturliniendarstellung in Fig.7 zweidimensionale sinc-Funktionen (sinc x = sin x/x). Die neun Punktziele haben verschiedene Entfernungs- und Azimutpositionen entsprechend dem gleichen TOPS-Burst.

Die Ziele sind so angeordnet, dass die Ziele in den Eckpositionen eine Szene mit den Abmessungen von 7200 m x 24655 m in der Azimutrichtung bzw. in der Entfernungsrichtung begrenzen. Die simulierte Geometrie entspricht dem Fall an Bord von Raumflugkörpern und die ausgewählte Referenz-Scaling-Entfernung war 596091,37 m. Die theoretischen geometrischen Auflösungen, die möglich sind, betragen etwa 14,16 m x 0,89 m in der Azimut- bzw. Entfernungsdimension. Die maximalen Abweichungen der gemessenen Auflösungen von den theoretischen Werten betragen 2 % im Azimut und 1 % in der Entfernung.

**Patentansprüche**

**1.** Verfahren zur Verarbeitung von TOPS(Terrain Observation by Progressive Scan)-SAR(Synthetic Aperture Radar)-Rohdaten in hochgenaue Bilddaten, **gekennzeichnet durch** eine zweidimensionale Verarbeitung der TOPS-SAR-Rohdaten **durch** ein Chirp-Scaling-Verfahren und ein Basisband-Azimut-Scaling-Verfahren unter Verwendung folgender aufeinanderfolgender Schritte:

a) Aufteilen der TOPS-SAR-Rohdaten in Azimut-Subapertur-Daten (3.1);
b) Ausführen einer Kurzzeit-Azimut-FFT (3.2);
c) Multiplizieren des Signals mit einer Chirp-Scaling-Funktion $H_{cs}$, die **durch**

$$H_{cs}\left(f_a, \tau; r_0\right) = \exp\left[-j \cdot \pi \cdot K_{eff}\left(f_a; r_{ref}\right) \cdot a\left(f_a\right) \cdot \left(\tau - \tau_{ref}\left(f_a\right)\right)\right]$$

gegeben ist, wobei $f_a$ die Azimutfrequenz, $r_0$ der kürzeste Abstand von einem Ziel, $r_{ref}$ eine Referenzentfernung, $\tau$ die Zeit in der auch als Range-Richtung bezeichneten Entfernungsrichtung, d.h. die Echolaufzeit, ist, der Faktor $a(f_a)$ die Frequenzabhängigkeit der Entfernungsvariation gemäß $a\left(f_a\right) = \dfrac{1}{\sqrt{1 - \left(\dfrac{\lambda \cdot f_a}{2 \cdot v}\right)^2}} - 1$ beschreibt, $\lambda$ eine Wellenlänge ist, $v$ die Geschwindigkeit auf dem Boden bezeichnet, $K_{eff}(f_a; r_{ref})$ die von der Azimutfrequenz $f_a$ und der Referenzentfernung $r_{ref}$ abhängige Modulationsrate in der Entfernungsrichtung ist und $\tau_{ref}(f_a)$ eine von der Azimutfrequenz $f_a$ abhängige Referenz-Echolaufzeit bedeutet (3.3, 3.4);
d) Ausführen einer Entfernungs-FFT zur Erzielung des Signals im zweidimensionalen Frequenzbereich (3.5);
e) Multiplizieren des Signals mit der Phasenfunktion $H_{rcmc}$, die **durch**

$$H_{rcmc}\left(f_a, f_r; r_{ref}\right) = \exp\left[-j \frac{\pi}{K_{eff}\left(f_a; r_{ref}\right) \cdot \left(1 + a\left(f_a\right)\right)} f_r^2\right] \cdot \exp\left[j \frac{4 \cdot \pi}{c} \cdot r_{ref} \cdot a\left(f_a\right) \cdot f_r\right]$$

gegeben ist, um die Korrektur der Entfernungsvariation, Entfernungskompression und der sekundären Entfernungskompression auszuführen wobei $f_r$ die Entfernungsfrequenz und $c$ die Lichtgeschwindigkeit ist (3.6, 3.7);
f) Ausführen einer Entfernungs-IFFT, um das Signal in den Entfernungs-Doppler-Bereich aufzunehmen (3.8);
g) Multiplizieren des Signals mit einer Phasenkorrekturfunktion $H_{corr}$, die **durch**

$$H_{corr}\left(f_a; r_0\right) = \exp\left[j \cdot \pi \cdot K_{eff}\left(f_a; r_{ref}\right) \cdot \left(1 + a\left(f_a\right)\right) \cdot a\left(f_a\right) \cdot \left(\frac{2}{c} \cdot \left(r_0 - r_{ref}\right)\right)^2\right]$$

gegeben ist, wobei $r_0$ die kürzeste Entfernung zu einem Punktziel ist (3.9, 3.10);
h) Multiplizieren der zweidimensionalen Daten, die im Entfernungs(= Range)-Doppler-Bereich und nach Ausführung der Hauptschritte einer Entfernungskompression und Entfernungsvariationskorrektur eines Ziels übernommen werden, mit einer Phasenfunktion $H_a(f_a; r_0)$, die **durch**

$$H_a\left(f_a; r_0\right) = \exp\left[j \cdot \frac{4 \cdot \pi}{\lambda} \cdot r_0 \cdot \left(\beta\left(f_a\right) - 1\right)\right] \cdot \exp\left[-j \cdot \frac{\pi}{K_{scl}(r)} \cdot f_a^2\right]$$

bestimmt ist, wobei

$$\beta(f_a) = \sqrt{1 - \left(\frac{\lambda \cdot f_a}{2 \cdot v}\right)^2}$$

$$K_{scl}(r) = -\frac{2 \cdot v^2}{\lambda \cdot r_{scl}(r)}$$

$$r_{scl}(r) = \frac{r_{scl0}}{r_{rot0}} r_{rot}(r)$$

$$r_{rot}(r) = \frac{r_{rot0} - r}{1 - {r_{scl0}}/{r_{rot0}}}$$

und wobei *r* der Entfernungsvektor, $K_{scl}(r)$ eine entfernungsunabhängige Dopplerrate, $r_{rot0}$ ein Rotationsabstand infolge der TOPS-Geometrie, $r_{scl0}$ eine entsprechend dem endgültigen, gewünschten Bildabstand ausgewählte Scaling-Entfernung, $r_{scl}(r)$ ein Scaling-Entfernungsvektor ist, wodurch die Scaling-Entfernungswerte innerhalb einer Entfernungsabmessung eines Bildes liegen und wodurch $r_{rot}(r)$ ein entfernungsabhängiger Rotationsabstandsvektor ist (3.11, 3.12);

i) Transformieren der Subapertur-Daten über kurze Azimut-IFFTs zurück in den Azimut- und Entfernungs-Zeit-Bereich (3.13);

j) Zusammenfügen der Azimut-Subaperturen (3.14);

k) Multiplizieren der zweidimensionalen Daten mit einer Derotationsfunktion $H_{derot}(t,r)$, die **durch**

$$H_{derot}(t,r) = \exp\left[-j \cdot \pi \cdot K_{rot}(r) \cdot (t - t_{mid})^2\right]$$

$$K_{rot}(r) = -\frac{2 \cdot v^2}{\lambda \cdot r_{rot}(r)}$$

gegeben ist, wobei *t* der Zeitvektor in der Azimutrichtung und $t_{mid}$ die Mittenzeit des Bursts ist (3.15, 3.16) ;

l) Transformieren der derotierten Daten über lange Azimut-FFTs in den Entfernungs-Doppler-Bereich (3.17);

m) darauf folgend Multiplizieren der zweidimensionalen Daten mit einer Azimutkompressionsfunktion $H_{comp}(f_a, r)$, die **durch**

$$H_{comp}(f_a,r) = W(f_a) \cdot \exp\left[ j \cdot \frac{\pi}{K_{eff}(r)} \cdot f_a^2 \right], \qquad -\frac{PRF}{2} + f_{DC} < f_a < \frac{PRF}{2} + f_{DC}$$

gegeben ist, wobei

$$K_{eff}(r) = K_{scl}(r) - K_{rot}(r)$$

die effektive Chirp-Rate nach den Scaling- und Derotationsoperationen, $W(f_a)$ die Gewichtungsfunktion zur Nebenzipfelunterdrückung und $f_{DC}$ der mittlere Dopplerzentroid der Datenerfassung ist, wobei dies im TOPS-Modus der einzige optimale Punkt ist, an welchem die Anwendung der Gewichtungsfunktion für die Nebenzipfelunterdrückung zu korrekten Ergebnissen führt, da alle Ziele im Basisband liegen (3.18, 3.19);

n) Transformieren der Daten über eine lange Azimut-IFFT in die Bilddaten (3.20); und

o) Multiplizieren der zweidimensionalen Bilddaten mit einer Phasenfunktion $H_{phase}(t,r)$, die **durch**

$$H_{phase}(t,r) = \exp\left[ j \cdot \pi \cdot K_t(r) \cdot \left(1 - \frac{r_{scl0}}{r_{rot0}}\right)^2 \cdot (t - t_{mid})^2 \right].$$

gegeben ist, wobei

$$K_t(r) = -\frac{2 \cdot v^2}{\lambda \cdot (r_{rot}(r) - r_{scl}(r))},$$

um eine Phasenerhaltung zu erreichen (3.21, 3.22).

2. Verwendung des Verfahrens gemäß Anspruch 1 für eine zweidimensionale Verarbeitung von SAR-, SONAR- und seismischen Rohdaten bei Abbildungsmodi mit Verwendung eines mechanischen und/oder elektronischen Schwenkens des Antennendiagramms in Azimut- und/oder in Elevationsrichtung.

## Claims

1. A method for processing TOPS(Terrain Observation by Progressive Scan)-SAR(Synthetic Aperture Radar)-raw data into highly accurate image data, **characterized by** two-dimensional processing of the TOPS-SAR raw data through a chirp scaling method and a baseband azimuth scaling method by use of the following successive steps:

   a) subdividing the TOPS-SAR raw data into azimuth subaperture data (3.1);
   b) performing a short-term azimuth FFT (3.2);
   c) multiplying the signal by a chirp scaling function $H_{cs}$ which is given by

$$H_{cs}\left(f_a,\tau;r_0\right) = \exp\left[-j\cdot\pi\cdot K_{eff}\left(f_a;r_{ref}\right)\cdot a\left(f_a\right)\cdot\left(\tau-\tau_{ref}\left(f_a\right)\right)\right]$$

wherein $f_a$ is the azimuth frequency, $r_0$ is the shortest range from a target, $r_{ref}$ is a reference range, $\tau$ is the time in the distance direction which is also referred to as the range direction, i.e. the echo propagation time, the factor $a(f_a)$ is the frequency dependency of the range variation according to

$$a\left(f_a\right) = \cfrac{1}{\sqrt{1-\left(\cfrac{\lambda\cdot f_a}{2\cdot v}\right)^2}} - 1\ ,$$

$\lambda$ is a wavelength, $v$ is the speed on the ground, $K_{eff}(f_a; r_{ref})$ is the modulation rate in the range direction depending on the azimuth frequency $f_a$ and the reference range $r_{ref}$, and $\tau_{ref}(f_a)$ is a reference echo propagation time (3.3, 3.4) depending the azimuth frequency $f_a$;
d) performing a range FFT for obtaining the signal in the two-dimensional frequency range (3.5);
e) multiplying the signal by the phase function $H_{rcmc}$ which is given by

$$H_{rcmc}\left(f_a,f_r;r_{ref}\right) = \exp\left[-j\frac{\pi}{K_{eff}\left(f_a;r_{ref}\right)\cdot\left(1+a\left(f_a\right)\right)}f_r^2\right]\cdot\exp\left[j\frac{4\cdot\pi}{c}\cdot r_{ref}\cdot a\left(f_a\right)\cdot f_r\right]$$

for performing the correction of the range variation, of the range compression and of the secondary range compression, $f_r$ being the range frequency and $c$ being the light velocity (3.6, 3.7);
f) performing a range IFFT so as to include the signal into the range Doppler region (3.8);
g) multiplying the signal by a phase correction function $H_{corr}$ which is given by

$$H_{corr}\left(f_a;r_0\right) = \exp\left[j\cdot\pi\cdot K_{eff}\left(f_a;r_{ref}\right)\cdot\left(1+a\left(f_a\right)\right)\cdot a\left(f_a\right)\cdot\left(\frac{2}{c}\cdot\left(r_0-r_{ref}\right)\right)^2\right]$$

wherein $r_0$ is the shortest range to a point target (3.9, 3.10);
h) multiplying the two-dimensional data which are taken over in the range Doppler region and after performing the main steps of range compression and range variation correction of a target, by a phase function $H_a(f_a;r_0)$ defined by

$$H_a\left(f_a;r_0\right) = \exp\left[j\cdot\frac{4\cdot\pi}{\lambda}\cdot r_0\cdot\left(\beta\left(f_a\right)-1\right)\right]\cdot\exp\left[-j\cdot\frac{\pi}{K_{scl}\left(r\right)}\cdot f_a^2\right]$$

wherein

$$\beta(f_a) = \sqrt{1 - \left(\frac{\lambda \cdot f_a}{2 \cdot v}\right)^2}$$

$$K_{scl}(r) = -\frac{2 \cdot v^2}{\lambda \cdot r_{scl}(r)}$$

$$r_{scl}(r) = \frac{r_{scl0}}{r_{rot0}} r_{rot}(r)$$

$$r_{rot}(r) = \frac{r_{rot0} - r}{1 - r_{scl0}/r_{rot0}}$$

and $r$ is the range vector, $K_{scl}(r)$ is a range-dependent Doppler rate, $r_{rot0}$ is a rotation range due to the TOPS geometry, $r_{scl0}$ is a scaling range selected according to the final desired image range, $r_{scl}(r)$ a scaling range vector, whereby the scaling range values are within a range dimension of an image and whereby $r_{rot}(r)$ is a range-dependent rotation range vector (3.11, 3.12);

i) transforming the subaperture data through short azimuth IFFTs back into the azimuth and range time domain (3.13);

j) joining the azimuth subapertures (3.14);

k) multiplying the two-dimensional data by a derotation function $H_{derot}(t,r)$ given by

$$H_{derot}(t,r) = \exp\left[-j \cdot \pi \cdot K_{rot}(r) \cdot (t - t_{mid})^2\right]$$

$$K_{rot}(r) = -\frac{2 \cdot v^2}{\lambda \cdot r_{rot}(r)}$$

wherein $t$ is the time vector in the azimuth direction and $t_{mid}$ is the middle time of the burst (3.15, 3.16);

l) transforming the derotated data through long azimuth FFTs into the range Doppler region (3.17);

m) subsequently, multiplying the two-dimensional data through an azimuth compression function $H_{comp}(f_a,r)$ which is given by

$$H_{comp}(f_a,r) = W(f_a) \cdot \exp\left[ j \cdot \frac{\pi}{K_{eff}(r)} \cdot f_a^2 \right], \qquad -\frac{PRF}{2} + f_{DC} < f_a < \frac{PRF}{2} + f_{DC}$$

wherein

$$K_{eff}(r) = K_{scl}(r) - K_{rot}(r)$$

is the effective chirp rate after the scaling and derotation operations, $W(f_a)$ is the weighting function for sidelobe suppression and $f_{DC}$ is the average Doppler centroid of the data capturing, wherein, in the TOPS mode, this is the only optimal point at which the application of the weighting function for sidelobe suppression leads to correct results because all targets are in baseband (3.18, 3.19);
n) transforming the data through a long azimuth IFFT into the image data (3.20); and
o) multiplying the two-dimensional image data through a phase function $H_{phase}(t,r)$ which is given by

$$H_{phase}(t,r) = \exp\left[ j \cdot \pi \cdot K_t(r) \cdot \left(1 - \frac{r_{scl0}}{r_{rot0}}\right)^2 \cdot (t - t_{mid})^2 \right]$$

wherein

$$K_t(r) = -\frac{2 \cdot v^2}{\lambda \cdot (r_{rot}(r) - r_{scl}(r))},$$

to achieve a phase maintenance (3.21, 3.22).

2. Use of the method according to according to claim 1 for two-dimensional processing of SAR, SONAR and seismic raw data in mapping modi involving the use of mechanical and/or electronic pivoting of the antenna diagram in the azimuth and/or elevation direction.

**Revendications**

1. Procédé de traitement de données brutes d'un SAR (Synthetic Aperture Radar) de TOPS (Terrain Observation by Progressive Scan) pour obtenir des données d'images de haute précision, **caractérisé par** un traitement bidimensionnel des données brutes du SAR de TOPS à l'aide d'un procédé du type "Chirp-Scaling" et d'un procédé de mise à l'échelle de l'azimut de bande à base, utilisant les étapes successives suivantes:

a) la division les données brutes du SAR de TOPS en des données d'azimut en sous-ouverture (3.1);
b) l'exécution d'une transformation de Fourier de courte durée d'azimut (3.2);
c) la multiplication du signal avec une fonction de Chirp-Scaling $H_{cs}$ qui est exprimée par

$$H_{cs}(f_a, \tau; r_0) = \exp\left[ -j \cdot \pi \cdot K_{eff}(f_a; r_{ref}) \cdot a(f_a) \cdot (\tau - \tau_{ref}(f_a)) \right]$$

ou $f_a$ est la fréquence azimutale, $r_0$ est la distance la plus courte à une cible, $r_{ref}$ est une distance de référence, $\tau$ est le temps dans la direction de distance, aussi appelé direction de portée, c'est à dire le retard de propagation d'écho, le facteur $a(f_a)$ décrit la dépendance de fréquence de la variation de la distance selon

$$a(f_a) = \cfrac{1}{\sqrt{1-\left(\dfrac{\lambda \cdot f_a}{2 \cdot v}\right)^2}} - 1 \, ,$$

$\lambda$ est une longueur d'onde, $v$ est la vélocité au sol, $K_{eff}(f_a; r_{ref})$ est le taux de modulation dans la direction de portée dépendant de la fréquence azimutale $f_a$ et de la distance de référence $r_{ref}$, et $\tau_{ref}(f_a)$ est une retard de propagation d'écho de référence (3.3, 3.4) dépendant de la fréquence azimutale $f_a$;

d) l'exécution d'une transformation de Fourier rapide de distance pour obtenir le signal dans une zone de fréquence bidimensionnelle (3.5);

e) la multiplication du signal par la fonction de phase $H_{rcmc}$ exprimée par

$$H_{rcmc}\left(f_a, f_r; r_{ref}\right) = \exp\left[-j \frac{\pi}{K_{eff}\left(f_a; r_{ref}\right) \cdot \left(1 + a(f_a)\right)} f_r^2\right] \cdot \exp\left[j \frac{4 \cdot \pi}{c} \cdot r_{ref} \cdot a(f_a) \cdot f_r\right]$$

afin de faire une correction de la variation de distance, de la compression de distance et de la compression de distance secondaire, $f_r$ étant la fréquence de distance et $c$ étant la vitesse de la lumière (3.6, 3.7);

f) l'exécution d'une IFFT de distance pour incorporer le signal dans le domaine d'effet Doppler de distance (3.8);

g) la multiplication du signal par une fonction de correction de phase $H_{corr}$ exprimée par

$$H_{corr}\left(f_a; r_0\right) = \exp\left[j \cdot \pi \cdot K_{eff}\left(f_a; r_{ref}\right) \cdot \left(1 + a(f_a)\right) \cdot a(f_a) \cdot \left(\frac{2}{c} \cdot \left(r_0 - r_{ref}\right)\right)^2\right]$$

ou $r_0$ est la distance la plus courte à un point de cible (3.9, 3.10);

h) la multiplication des données bidimensionnelles incorporées dans le domaine d'effet Doppler de distance et après l'exécution les étapes principales de compression de distance et de correction de variation de distance d'une cible, par une fonction de phase $H_a(f_a; r_0)$ définie par

$$H_a(f_a; r_0) = \exp\left[j \cdot \frac{4 \cdot \pi}{\lambda} \cdot r_0 \cdot \left(\beta(f_a) - 1\right)\right] \cdot \exp\left[-j \cdot \frac{\pi}{K_{scl}(r)} \cdot f_a^2\right]$$

ou

$$\beta(f_a) = \sqrt{1 - \left(\frac{\lambda \cdot f_a}{2 \cdot v}\right)^2}$$

$$K_{scl}(r) = -\frac{2 \cdot v^2}{\lambda \cdot r_{scl}(r)}$$

$$r_{scl}(r) = \frac{r_{scl0}}{r_{rot0}} r_{rot}(r)$$

$$r_{rot}(r) = \frac{r_{rot0} - r}{1 - r_{scl0}/r_{rot0}}$$

et $r$ est le vecteur de distance, $K_{scl}(r)$ est un taux Doppler dependant de la distance, $r_{rot0}$ une distance de rotation causée par la géométrie TOPS, $r_{scl0}$ est une distance de mise à l'échelle choisie en fonction de la distance d'image finale désirée, $r_{scl}(r)$ est un vecteur de distance de mise à l'échelle, les valeur de distance de mise à l'échelle se situant ainsi dans une mesure de distance d'une image et $r_{rot}(r)$ étant un vecteur de distance de rotation dépendant de la distance (3.11, 3.12);

i) la transformation des données de sous-ouverture par IFFTs de l'azimut de courtes durées pour les retourner dans le domaine temps de l'azimut et de la distance (3.13);

j) l'assemblage des sous-ouvertures de l'azimut (3.14);

k) la multiplication des données bidimensionnelles par une fonction de dérotation $H_{derot}(t,r)$ exprimée par

$$H_{derot}(t,r) = \exp\left[- j \cdot \pi \cdot K_{rot}(r) \cdot (t - t_{mid})^2 \right]$$

$$K_{rot}(r) = -\frac{2 \cdot v^2}{\lambda \cdot r_{rot}(r)}$$

ou $t$ est le vecteur de temps dans la direction de l'azimut et $t_{mid}$ est le temps intermédiaire de la salve (3.15, 3.16);

l) la transformation des données soumises à la dérotation par des FFTs de l'azimut de longues durées dans le domaine Doppler de distance (3.17);

m) ensuite, la multiplication des données bidimensionnelles par une fonction de compression de l'azimut $H_{comp}(f_a,r)$ exprimée par

$$H_{comp}(f_a,r) = W(f_a) \cdot \exp\left[ j \cdot \frac{\pi}{K_{eff}(r)} \cdot f_a^2 \right], \qquad -\frac{PRF}{2} + f_{DC} < f_a < \frac{PRF}{2} + f_{DC}$$

ou

$$K_{eff}(r) = K_{scl}(r) - K_{rot}(r)$$

est le taux effectif de chirp après les operations de mise à l'échelle et de dérotation, $W(f_a)$ est la fonction de pondération pour la suppression de lobes latéraux et $f_{DC}$ est le centroïde moyen Doppler de l'acquisition des données, ou, en mode de TOPS, c'est le seul point optimal où l'application de la fonction de pondération pour la suppression de lobes latéraux donne des résultats correctes car toutes les cibles sont situées dans la bande de base (3.18, 3.19);

n) la transformation des données dans les données d'image par une IFFT de l'azimut de longue durée (3.20); et

o) la multiplication des données d'image bidimensionnelles par une fonction de phase $H_{phase}(t,r)$ exprimée par

$$H_{phase}(t,r) = \exp\left[ j \cdot \pi \cdot K_t(r) \cdot \left(1 - \frac{r_{scl0}}{r_{rot0}}\right)^2 \cdot (t - t_{mid})^2 \right]$$

ou

$$K_t(r) = -\frac{2 \cdot v^2}{\lambda \cdot (r_{rot}(r) - r_{scl}(r))},$$

afin de préserver la phase (3.21, 3.22).

2. Utilisation du procédé selon la revendication 1, pour le traitement bidimensionnelle de données brutes SAR, SONAR et sismiques dans de modes de reproduction utilisant un pivotement mécanique et/ou électronique de l'empreinte du rayonnement de l'antenne dans la direction de l'azimut et/ou d'élévation.

Fig.1

Fig.2

TOPS-Rohdaten

3.1 — Aufteilung in Subaperturen

3.2 — Kurze Azimut-FFT

3.4 — ⊗ ◄— Chirp-Scaling — 3.3

3.5 — Entfernungs-FFT

3.7 — ⊗ ◄— Korrektur der Zielentfernungsvariation / Entfernungskompression / Sekundäre Entfernungskompression — 3.6

3.8 — Entfernungs-IFFT

3.10 — ⊗ ◄— Phasenkorrektur infolge von Chirp-Scaling — 3.9

3.12 — ⊗ ◄— Azimut-Scaling — 3.11

Kurze Azimut-IFFT — 3.13

3.14 — Zusammenfügung von Subaperturen

3.16 — ⊗ ◄— Derotation — 3.15

3.17 — Lange Azimut-FFT

3.19 — ⊗ ◄— Azimutkompression und Wichtung — 3.18

3.20 — Lange Azimut-IFFT

3.22 — ⊗ ◄— Phasenerhaltung — 3.21

Verarbeitetes Bild

# Fig.3

Rotationszentrum

Fig.4

Fig.5

Fig.6

Fig.7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0795762 B1

- EP 0924534 B1

**In der Beschreibung aufgeführte Nicht-Patentliteratur**

- **F. De Zan ; A. Monti Guarnieri.** TOPSAR: Terrain observation by progressive scan. *IEEE Trans. on Geosci. and Remote Sensing,* September 2006, vol. 44 (9), 2352-2360
- **C. Prati ; A. Monti Guarnieri ; F. Rocca.** SPOT mode SAR focusing with the ω-k technique. *Proc. IEEE Geoscience and Remote Sensing Symposium,* 03. Juni 1991, 631-634
- **A. Monti Guarnieri ; C. Prati.** ScanSAR focusing and interferometry. *IEEE Transactions on Geoscience and Remote Sensing,* Juli 1996, vol. 34 (4), 1029-1038

- **J. Mittermayer ; R. Lord ; E. Börner.** Sliding spotlight SAR processing for TerraSAR-X using a new formulation of the extended chirp scaling algorithm. *Proc. IEEE Geoscience and Remote Sensing Symposium,* 21. Juli 2003
- **A. Moreira ; J. Mittermayer ; R. Scheiber.** Extended Chirp Scaling Algorithm for Air- and Spaceborne SAR Data Processing in Stripmap and ScanSAR Imaging Modes. *IEEE Transactions on Geoscience and Remote Sensing,* 1996, vol. 34 (5), 1123-1136
- **A. Moreira ; R. Scheiber ; J. Mittermayer.** Azimuth and Range Scaling for SAR and ScanSAR Processing. *Proc. IEEE Geoscience and Remote Sensing Symposium,* 1996